# EUROPÄISCHE PATENTSCHRIFT

(11) **EP 0 280 075 B1**
(45) Veröffentlichungstag und Bekanntmachung des Hinweises auf die Patenterteilung: **22.09.1993**
(21) Anmeldenummer: 88101498.9
(22) Anmeldetag: 02.02.1988
(51) Int. Cl.: H04B 10/14

(54) **Optischer Polarisations-Diversitäts-Empfänger**
Optical receiver with polarisation diversity
Récepteur optique à diversité de polarisation

(30) Priorität: 27.02.1987 DE 3706464
(43) Veröffentlichungstag der Anmeldung: 31.08.1988
(73) Patentinhaber: SIEMENS AKTIENGESELLSCHAFT, 80333 München (DE)
(72) Erfinder: Pietzsch, Joachim , Dr., D-8000 München 70 (DE); Noe, Reinhold, D-8000 München 40 (DE)

(56) Entgegenhaltungen:
- DE-A- 3 431 896
- JOURNAL OF LIGHTWAVE TECHNOLOGY, Band LT-3, Nr. 5, Oktober 1985, Seiten 1110-1122, New York, US; ABBAS et al.: "A Dual-Detector Optical Heterodyne Receiver for Local Oscillator Noise Suppression"
- ECOC'86, "EUROPEAN CONFERENCE ON OPTICAL COMMUNICATIONS", Barcelona, SP, 22.-25. September 1986, Seiten 407-410; H. KUWAHARA et al.: "New Receiver Design for Practical Coherent Lightwave Transmission System"
- 4TH ICIO AND OFC, FOURTH INTERNATIONAL CONFERENCE ON INTEGRATED OPTICS AND OPTICAL FIBER COMMUNICATION, Tokyo, JP, 27.-30. Juni 1983, Seiten 385-387; T. OKOSHI et al.: "Polarization-Diversity Receiver for Heterodyne/Coherent Optical Fiber Communications"

## Beschreibung

Die Erfindung betrifft einen optischen Polarisations-Diversitäts-Empfänger für modulierte Lichtsignale entsprechend dem Oberbegriff des Anspruchs 1.

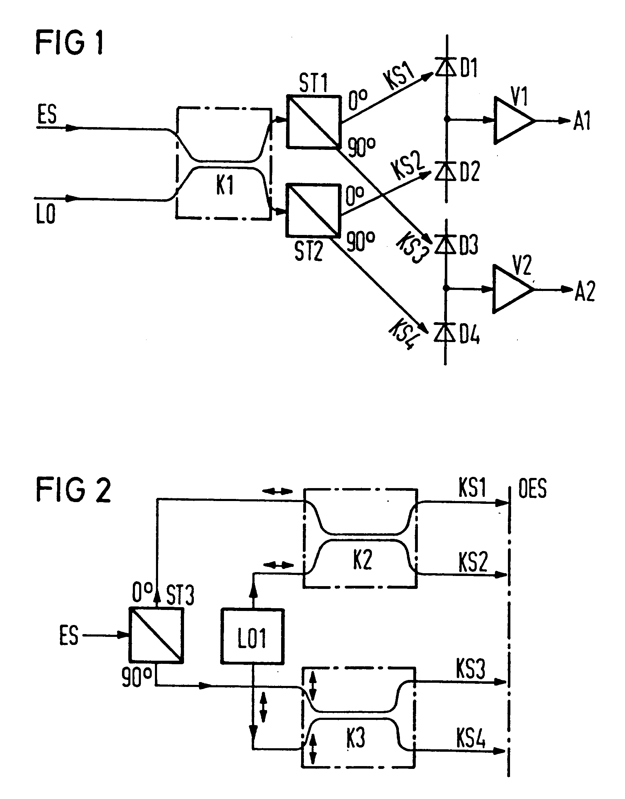

Ein optischer Polarisations-Diversitäts-Empfänger für modulierte Lichtsignale der eingangs geschilderten Art ist aus ECOC 86, Band 1, Seiten 407 - 410 bekannt. Die Fig. 7 aus diesem bekannten Stand der Technik wurde als Fig. 1 in die vorliegende Anmeldung übernommen. Das modulierte Lichtsignal als Eingangssignal wird dem Eingangsanschluß ES zugeführt, an den ein Anschluß eines ersten 3 dB-Kopplers K1 geführt ist. Ein weiterer Anschluß dieses Kopplers ist mit dem Anschluß LO für das Signal des lokalen Lasers verbunden. Das den ersten 3 dB-Koppler K1 verlassende Licht gelangt auf einen ersten und einen zweiten optischen Strahlteiler ST1, ST2, die den aufgenommenen Lichtstrahl jeweils in zwei optische Kombinationssignale aufteilen und jedes dieser Kombinationssignale einem opto-elektrischen Wandler in Form einer Photodiode zuführen. Dabei verlassen den ersten Strahlteiler ST1 das erste und das dritte optische Kombinationssignal KS1, KS3, die an die erste und die dritte Photodiode D1, D3 angelegt werden; den zweiten Strahlteiler verläßt das zweite und das vierte optische Kombinationssignal KS2, KS4, die an die zweite und die vierte Photodiode D2, D4 angelegt werden. Die Polarisationen des ersten und zweiten bzw. des dritten und vierten Kombinationssignals sind dabei gleich, außerdem sind die Polarisationen des ersten und zweiten zum dritten und vierten Kombinationssignal dabei orthogonal und die Phasendifferenzen zwischen den Komponenten des ersten bzw. dritten Kombinationssignals sind um 180° phasenverschoben gegenüber den Phasendifferenzen zwischen den Komponenten des zweiten bzw. vierten Kombinationssignals. Die erste und die zweite sowie die dritte und die vierte Photodiode sind dabei in Reihe geschaltet und an den Verbindungspunkt der ersten mit der zweiten sowie der dritten mit der vierten Photodiode sind ein erster bzw. zweiter Verstärker V1, V2 als Teil des Polarisations-Diversitäts-Empfängers angeschlossen. Die beiden Photodioden mit dem nachgeschalteten Verstärker bilden dabei jeweils den Eingangsteil eines Empfängerzweigs. In jedem Empfängerzweig werden die elektrischen Signale demoduliert, die sich aus zwei optischen Kombinationssignalen mit gleicher Polarisation ergeben, die Ausgangssignale der Empfängerzweige werden summiert, dabei kann es vorkommen, daß nur optische Kombinationssignale mit einer einzigen Polarisation auftreten, in einem der beiden Empfängerzweige also ein sehr geringes oder sogar ein verschwindendes elektrisches Signal vorliegt. In diesem Fall trägt über den abschließenden Summierer der leerlaufende Empfängerzweig also nur zur Rauschleistung bei, so daß sich das Signal-Rauschverhältnis entsprechend verschlechtert.

Ein optischer Polarisations-Diversitäts-Empfänger ist auch aus dem Technical Digest of the International Conference on Integrated Optics and Optical Fibre Communication 27.-30.06.83, Tokio, bekannt. Diese bekannte Anordnung ist Grundlage der Figur 2. Das am Eingangssignalanschluß ES ankommende Licht wird mittels eines dritten Strahlteilers ST 3 in zwei linear polarisierte Anteile aufgespalten, wobei die Polarisationen zueinander orthogonal sind. Von einem lokalen Laser LO1 werden zwei Lichtsignale erzeugt, deren Polarisationen mit denen der vom dritten Strahlteiler erzeugten Lichtsignale übereinstimmen. Jeweils ein gleichpolarisiertes Lichtsignal des dritten Strahlteilers und des lokalen Lasers werden in einem zweiten bzw. dritten 3 dB-Koppler miteinander kombiniert, so daß am Ausgang der beiden Koppler insgesamt vier optische Kombinationssignale auftreten, von denen zwei jeweils gleichpolarisiert sind. Diese Lichtsignale können wiederum im Gegentakt zusammengeschalteten Diodenpaaren zugeführt werden, die die opto-elektronische Schnittstelle OES darstellen. Auch bei dieser Anordnung fallen Anteile a bzw. 1 - a der Signalleistung in die beiden Empfängerzweige und es erfolgt eine kohärente Addition der beiden Empfängerzweige im ZF-Bereich nach Ausgleich der unterschiedlichen Phasen mittels Phasenschieber. Die Phasen der ZF-Signale entsprechen dabei den Phasendifferenzen zwischen dem Eingangssignal und dem Signal des lokalen Lasers an jeder Photodiode. Auch in diesem Falle kann, wenn der Anteil a = 1 oder a = 0 ist, das Empfangslicht nur in einem Empfängerzweig auftreten, so daß auch in diesem Falle der andere Empfängerzweig kein Signal abgibt, aber zum Rauschen beiträgt. Aus diesem Grunde wird mittels eines Polarisationselementes im Signalweg annähernd a = 1/2 eingestellt, so daß in beiden Empfängerzweigen annähernd gleiche Signalleistung auftritt. Nachteilig ist in diesem Falle die Dämpfung des Signals durch das Polarisationsregelelement, außerdem kann bei stetigen Polarisationsveränderungen in einem praktisch unbeschränkten Bereich, also bei sogenannten "endlosen" Polarisationsänderungen vorübergehend ein Signalverlust auftreten, außerdem ergibt sich ein erhöhter Aufwand durch eine zusätzliche Phasenschieberanordnung.

Aus Electronics Letters vom 14. März 1985 VOL 21 Nr. 6 Seiten 251 und 252 ist ein Polarisationsstrahlteiler bekannt, bei dem mittels eines faseroptischen Polarisationsstrahlteilers ein Lichtsignal in zwei zueinander orthogonale Anteile aufgespalten werden kann.

Die Aufgabe bei der vorliegenden Erfindung besteht also darin, einen optischen Polarisations-Diversitäts-Empfänger mit verbessertem Signal-Rauschverhältnis bei möglichst geringem Aufwand zu schaffen.

Erfindungsgemäß wird die Aufgabe dadurch gelöst, daß der eingangs erwähnte optische Polarisations-Diversitäts-Empfänger durch die Merkmale des Kennzeichens des Patentanspruchs 1 weitergebildet ist. Von besonderem Vorteil ist bei der erfindungsgemäßen Lösung, daß ein derartiger Empfänger für ein Eingangssignal mit beliebiger Polarisation geeignet ist und auch bei beliebig wandernder Polarisation des Eingangssignals keine zusätzliche Anordnung zur Polarisationsregelung für das Eingangssignal oder das Signal des lokalen Lasers erforderlich ist. Außerdem ist bei inkohärenten Demodulationsverfahren, beispielsweise DPSK mit Laufzeitdemodulator oder FSK mit Hüllkurvendemodulator oder Frequenzdiskriminator oder ASK-Hüllkurvendemodulator eine Anordnung möglich, die keine Phasenkorrektur zwischen den beiden Empfängerzweigen benötigt. Damit kann auch Heterodynempfang bei beliebig kleinem Verhältnis zwischen der Zwischenfrequenz und der Bitrate durchgeführt werden, es ist also auch Homodynempfang möglich.

Vorteilhafte Weiterbildungen des erfindungsgemäßen optischen Polarisations-Diversitäts-Empfängers sind in den Patentansprüchen 2 bis 9 näher beschrieben.

Die Erfindung soll im folgenden anhand der Zeichnungen näher erläutert werden. In der Zeichnung zeigt
- Fig. 1: einen optischen Polarisations-Diversitäts-Empfänger nach dem Stande der Technik, bei dem Eingangssignal und Signal des lokalen Lasers unmittelbar miteinander kombiniert werden,
- Fig. 2: den optischen Signalverarbeitungsteil eines weiteren bekannten optischen Polarisations-Diversitäts-Empfängers, bei dem Eingangssignal und Signal des lokalen Lasers jeweils in hinsichtlich der Polarisation zueinander orthogonale Komponenten aufgespalten und diese miteinander kombiniert werden,
- Fig. 3: ein erstes Ausführungsbeispiel des erfindungsgemäßen optischen Polarisations-Diversitäts-Empfängers, bei dem demodulierte Signale einem Summierer zugeführt werden,
- Fig. 4: ein zweites Ausführungsbeispiel des erfindungsgemäßen optischen Polarisations-Diversitäts-Empfängers, bei dem die Signale nach der Summierung demoduliert werden,
- Fig. 5: ein drittes Ausführungsbeispiel eines erfindungsgemäßen optischen Polarisations-Diversitäts-Empfängers mit detaillierter dargestelltem Regelteil,
- Fig. 6: ein viertes Ausführungsbeispiel eines elektrischen Signalverarbeitungsteils für Hüllkurvendemodulation,
- Fig. 7: einen als Homodynempfänger ausgebildeten erfindungsgemässen optischen Polarisations-Diversitäts-Empfänger,
- Fig. 8: ein Ausführunsbeispiel für eine Regelteilhälfte für Rückwärtsregelung und
- Fig. 9: ein weiteres Ausführungsbeispiel für eine Rückwärtsregelung, die in diesem Falle auf photoelektrische Wandler wirkt.

Die Figuren 1 und 2 sind bei der Darstellung des Standes der Technik bereits ausreichend erläutert worden, so daß an dieser Stelle nicht weiter darauf eingegangen wird.

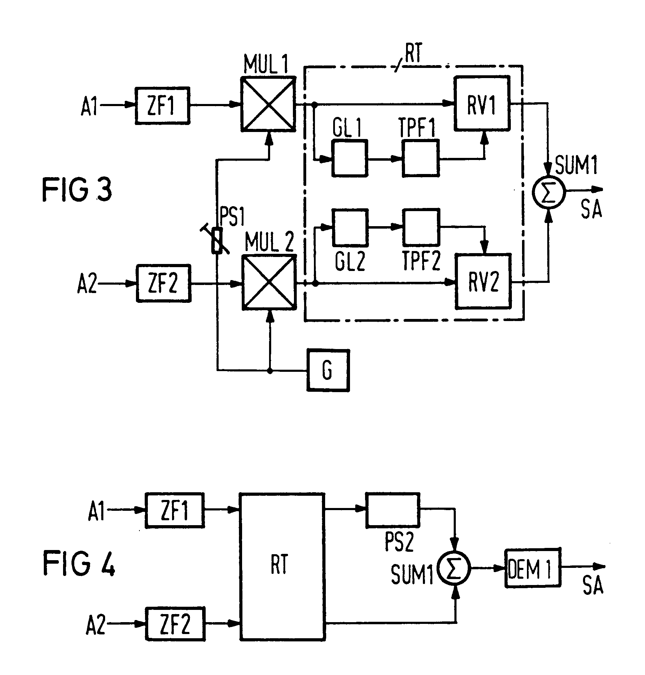

In der Fig. 3 ist der elektrische Signalverarbeitungsteil eines erfindungsgemäßen optischen Polarisations-Diversitäts-Empfängers für Lichtsignale mit PSK-Modulation dargestellt. Die Anschlüsse A1 und A2 sind beim Ausführungsbeispiel mit den gleichnamigen Anschlüssen der Fig. 1 verbunden. An jedem der beiden Anschlüsse steht also ein elektrisches Signal, das durch Verstärkung mittels der Photostromverstärker V1, V2 aus der Differenz der Photoströme der ersten und der zweiten Diode D1, D2 bzw. der dritten und der vierten Diode D3, D4 gewonnen wurde. In den ZF-Verstärkern ZF1, ZF2 erfolgt eine weitere Verstärkung. Die Ausgangssignale der ZF-Verstärker gelangen an die Eingänge eines ersten und eines zweiten Multiplizierers MUL1, MUL2, bei denen es sich um handelsübliche Mischer handelt. Da beim Ausführungsbeispiel eine PSK-Modulation des Übertragungssignals angenommen wurde, werden zur kohärenten Demodulation dieser Signale die beiden ZF-Signale mit je einem Referenzträgersignal RTS1, 2 multipliziert. Die beiden Referenzträgersignale RTS1, RTS2 werden dabei aus einem Referenzträgersignal RTS gewonnen, das man in zwei Zweige aufspaltet, deren Phasen gegeneinander mittels eines Endlos-Phasenschiebers verschoben werden. Als Endlos-Phasenschieber ist dabei nicht ein Breitbandphasenschieber sondern nur ein Schmalbandphasenschieber für das Referenzträgersignal notwendig. Die Ansteuerung des Endlos-Phasenschiebers erfolgt dabei durch ein Signal, das sich aus dem Phasenvergleich der beiden ZF-Signale ergibt.

An die Multiplizierer schließt sich der Regelteil RT an, der ebenfalls in symmetrischer Anordnung zwei Zweige enthält. In jedem der Zweige sind mit dem Ausgang jeweils eines der Multiplizierer MUL1, MUL2 der Eingang eines Regelverstärkers RV1, RV2 sowie der Eingang eines ersten bzw. zweiten Gleichrichters GL1, GL2 verbunden. Durch die Gleichrichter werden den Amplituden der an den Ausgängen der Multiplizierer auftretenden demodulierten Signale entsprechende Regelsignale erzeugt. Die Ausgänge der Demodulatoren sind jeweils über ein erstes bzw. zweites Tiefpaßfilter TPF1, TPF2 mit Regeleingängen der Regelverstärker RV1, RV2 verbunden. Durch die Tiefpaßfilter werden die hochfrequenten Anteile der Regelsignale ausgefiltert. Bei ausreichendem Pegel können an Stelle regelbarer Verstärker auch regelbare Abschwächer oder andere Multipliziereranordnungen eingesetzt werden. An den Ausgängen der Regelverstärker stehen nunmehr die gewichteten Basisbandsignale, die in einem ersten Summierer SUM 1 summiert und ggf. über ein weiteres Tiefpaßfilter an einen Signalausgang SA abgegeben werden. Im allgemeinen Fall, in dem die Eingangssignalamplituden in den beiden Empfängerzweigen nicht gleich sind, verhalten sich die Gewichtungsfaktoren zueinander wie die Wurzeln der normierten Signal-Leistungsanteile a bzw. 1-a. Statt der Amplituden der Basisbandsignale können auch ihre Leistungen zur Gewinnung der Gewichtungsfaktoren verwendet werden, statt der Basisbandsignale können auch die ZF-Signale der beiden Empfängerzweige zur Bestimmung der Gewichtsfaktoren verwendet werden. Durch die gewichtete Summierung addieren sich, sofern die Empfangsleistung auf beide Zweige verteilt ist, die Nutzsignale kohärent und das Rauschen inkohärent. Fällt dagegen die Empfangsleistung nur in einen Zweig, dann würde ohne gewichtete Addition das Signal des einen Zweiges und das Rauschen der beiden Zweige im Ausgangssignal enthalten sein. Durch die gewichtete Addition wird dagegen in diesem Fall der signallose Zweig in seiner Verstärkung soweit verringert, daß dieser Zweig keinen wesentlichen Rauschanteil liefert.

In der Fig. 4 ist wiederum der sich an die opto-elektrische Wandleranordnung anschließende Abschnitt des elektrischen Signalverarbeitungsteils eines erfindungsgemäßen optischen Polarisations-Diversitäts-Empfängers dargestellt. Bis zu den Ausgängen der ZF-Verstärker ZF1, ZF2 stimmt die Anordnung nach der Fig. 4 mit denen nach der Fig. 3 überein, neu ist aber, daß sich an die ZF-Verstärker unmittelbar ein Regelteil RT anschließt, der in der Fig. 3 dargestellt ist. Statt der Basisbandsignale werden die ZF-Signale der beiden Empfängerzweige zur Bestimmung der Gewichtsfaktoren verwendet und damit auch die ZF-Signale der beiden Zweige gewichtet. Anstelle der für Basisbandsignale geeigneten Regelverstärker RV1, RV 2 müssen also in diesem Regelteil für die Verstärkung der ZF-Signale geeignete geregelte Verstärker enthalten sein. Die Ausgangssignale des Regelteils werden wiederum im ersten Summierer SUM 1 summiert, zur Anpassung der Phasen der beiden Zweige ist einem der beiden Eingänge des ersten Summierers ein Endlos-Phasenschieber vorgeschaltet, der relativ breitbandig für die ZF-Bänder ausgelegt sein muß. An den ersten Summierer SUM 1 schließt sich der erste Demodulator DEM1 an, bei dem es sich um einen Hüllkurvendemodulator oder um einen Synchrondemodulator handelt.

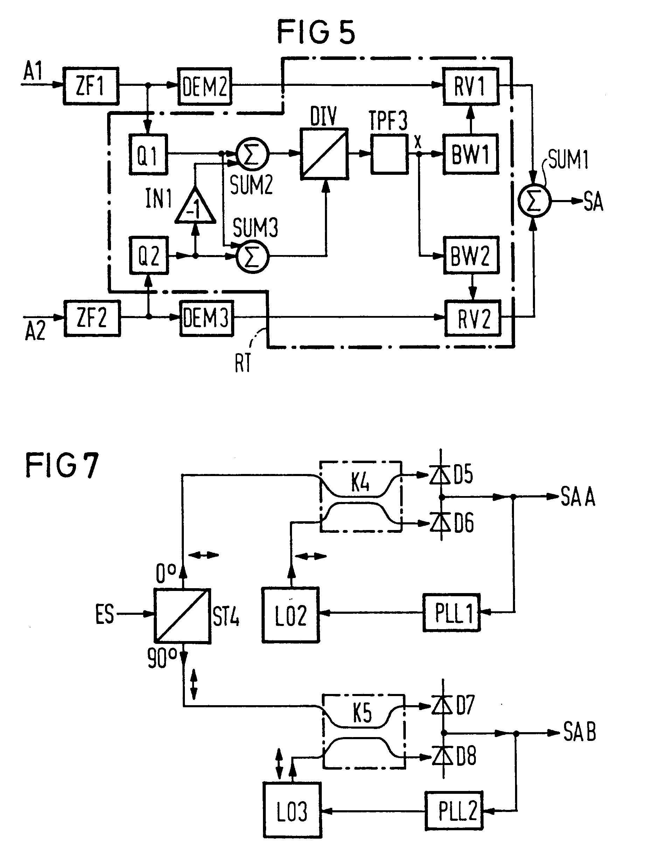

Der in der Fig. 5 dargestellte elektrische Signalverarbeitungsteil entspricht hinsichtlich des Signalweges der Anordnung nach Fig. 3. Es sind also ebenfalls mit den Ausgangsanschlüssen A1, A2 der opto-elektrischen Wandleranordnung bzw. zweier zwischengeschalteter Photostromverstärker mit Tiefpaßquarakter die beiden ZF-Verstärker ZF1, ZF2 verbunden. In jedem Empfängerzweig ist mit dem Ausgang eines der ZF-Verstärker über einen zweiten bzw. dritten Demodulator DEM2, DEM3 der Eingang eines der geregelten Verstärkers RV1, RV2 verbunden, deren Ausgänge über den ersten Summierer SUM1 verbunden sind. Die Erzeugung des Steuersignales für die Regelverstärker RV1, RV2 geschieht mittels eines ersten bzw. zweiten Quadrierers Q1, Q2, die jeweils mit einem der Ein- oder Ausgänge des zweiten bzw. dritten Demodulators DEM2, DEM3 verbunden sind und deren Ausgangsanschluß direkt mit einem Eingangsanschluß eines zweiten bzw. dritten Summierers SUM2, SUM3 verbunden sind. Außerdem ist der Ausgangsanschluß des ersten Quadrierers Q1 mit einem weiteren Eingangsanschluß des dritten Summierers SUM3 direkt verbunden, während der Ausgangsanschluß des zweiten Quadrierers Q2 über einen ersten Inverter IN1 mit einem weiteren Eingang des zweiten Summierers SUM2 verbunden ist. Dadurch erfolgt im zweiten Summierer SUM2 eine Subtraktion der Ausgangssignale des ersten und des zweiten Quadrierers Q1, Q2, während im dritten Summierer SUM3 eine Addition der Ausgangssignale erfolgt. Die Ausgangsanschlüsse des zweiten und dritten Summierers SUM2, SUM3 sind jeweils getrennt mit Eingängen eines handelsüblichen Analog-Dividierers DIV verbunden, dessen Ausgangsanschluß über ein drittes Tiefpaßfilter TPF3 mit Eingangsanschlüssen eines ersten und eines zweiten Bewerters BW1, BW2 verbunden sind. Der Ausgangsanschluß des ersten Bewerters BW1 ist mit einem Regelspannungseingang des ersten geregelten Verstärkers RV1 verbunden, der Ausgangsanschluß des zweiten Bewerters BW2 ist entsprechend mit einem Regelspannungseingang des zweiten Verstärkers RV 2 verbunden.

Der erste Bewerter BW1 enthält eingangsseitig einen Summierer, der zweite Bewerter enthält eingangsseitig einen Subtrahierer. Die positiven Eingänge von Summierer und Subtrahierer sind mit einer Referenzspannungsquelle verbunden, die Referenzspannung entspricht dabei dem maximalen Betrag des Ausgangssignals x des dritten Tiefpaßfilters TPF3. Der weitere positive Eingang des Summierers und der negative Eingang des Subtrahierers sind mit dem Eingang des dritten Tiefpaßfilters TPF3 verbunden. Die Ausgänge von Summierer und Subtrahierer sind jeweils getrennt mit einem zugeordneten handelsüblichen Radizierer verbunden. Die Ausgänge der Radizierer stellen die Ausgänge des ersten bzw. zweiten Bewerters BW1, BW2 dar.

Vom ersten Bewerter BW1 wird dann an den Regelspannungseingang des ersten Regelverstärkers RV1 ein Signal abgegeben, das x entspricht. Vom zweiten Bewerter BW2 wird entsprechend ein Signal abgegeben, das 1-x entspricht, so daß die Ausgangssignalamplitude des ersten Regelverstärkers RV1 das Produkt aus der Eingangssignalamplitude und Signal x entspricht, während die Ausgangssignalamplitude des zweiten Regelverstärkers RV2 das Produkt aus der Eingangssignalamplitude dieses Verstärkers mit 1-x darstellt.

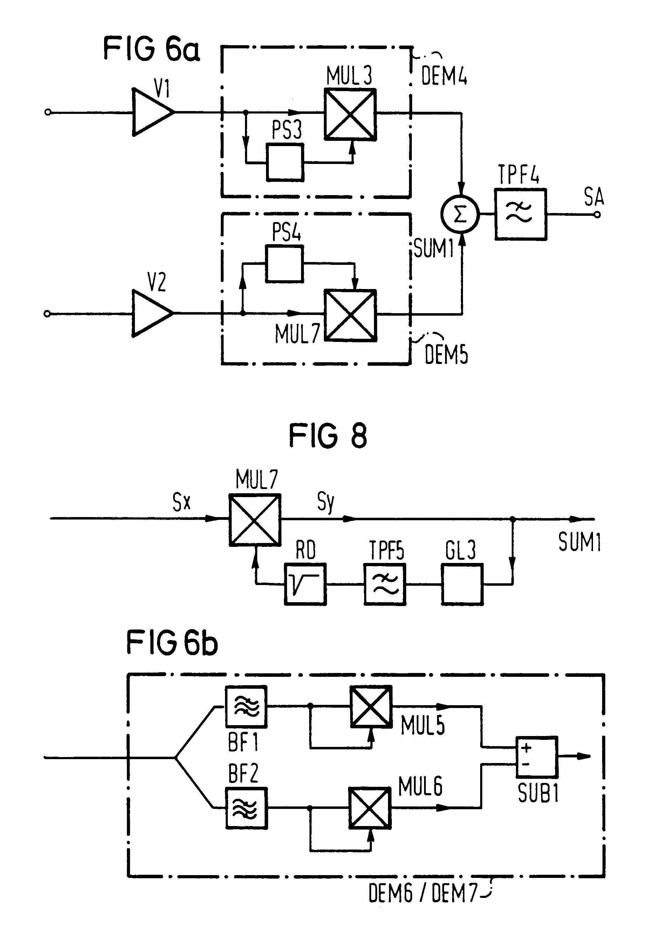

Die Fig. 6a zeigt einen besonders einfach aufgebauten elektrischen Signalverarbeitungsteil für Hüllkurvendemodulation. Die Fig. 6a zeigt dabei eine Ausführung für DPSK-Modulation, die sich in einfacher Weise für ASK-Modulation anpassen läßt. In der Fig. 6a sind eingangsseitig wiederum wie bei der Fig. 1 die Verstärker V1, V2 dargestellt. Mit dem Ausgang des ersten Verstärker V1 ist in diesem Falle der Eingang eines vierten Demodulators DEM4 verbunden, der einen dritten Multiplizierer MUL3 und ein drittes Laufzeitglied PS3 enthält. Die Eingänge des dritten Multiplizierers MUL3 und des dritten Laufzeitgliedes PS3 sind miteinander und mit dem Ausgang des Verstärkers V1 verbunden. Der Ausgang des dritten Laufzeitgliedes PS3 ist mit einem weiteren Eingang des Multiplizierers MUL3 verbunden, dessen Ausgang stellt den Ausgang des vierten Demodulators DEM4 dar. In analoger Weise ist der zweite Empfängerzweig aufgebaut, der in einem fünften Demodulator DEM5 ein viertes Laufzeitglied PS4 und einen vierten Multiplizierer MUL4 enthält. Die Ausgänge des vierten und des fünften Demodulators DEM4, DEM5 sind wahlweise direkt mit zugeordneten Eingangsanschlüssen des ersten Summierers SUM1 verbunden, zusätzlich kann in die Verbindung jeweils ein Tiefpaßfilter eingeschaltet werden. An Stelle zweier Tiefpaßfilter kann auch ein einziges vorgesehen werden, das beim Ausführungsbeispiel als viertes Tiefpaßfilter TPF4 dem Ausgang des ersten Summierers SUM1 nachgeschaltet ist und an dessen Ausgang das Basisbandsignal entnehmbar ist. Das dritte und das vierte Laufzeitglied PS3, PS4 sind so bemessen, daß durch sie die von den Verstärkern V1, V2 abgegebenen digitalen Signale um eine Bitdauer verzögert werden. Dadurch steht jeweils an einem Eingang des dritten und des vierten Multiplizierers MUL3, MUL4 das unverzögerte digitale Signal und das um eine Bitdauer verzögerte digitale Signal an, diese Signale werden multipliziert. Das Ausgangssignal der Multiplizierer MUL3, MUL4 enthält neben dem Basisbandsignal noch höherfrequente Signalanteile, die durch die Tiefpaßfilter unterdrückt werden. Im vierten und fünften Demodulator DEM4, DEM5 erfolgt nicht nur die Demodulation des Übertragungssignals, sondern auch eine Bewertung der Amplitude des Signals im jeweiligen Empfängerzweig. Durch die analoge Multiplikation zweier unmittelbar benachbarter Bits ergibt sich ein Analogsignal, dessen mittlere Leistung proportional dem Quadrat der mittleren Leistung am Eingang des ersten bzw. zweiten Verstärkers V1, V2 ist. Damit entsprechen der vierte und der fünfte Demodulator DEM4, DEM5 dem Regelteil RT nach der Fig. 3 zur Einstellung der Leistungsverstärkung im jeweiligen Empfängerzweig in Abhängigkeit von der Eingangsleistung.

Die Anordnung nach der Fig. 6a kann auch beim Empfang ASK-modulierter Lichtsignale, also von Lichtsignalen mit Amplitudensprungmodulation verwendet werden. In diesem Falle entfallen das dritte und das vierte Laufzeitglied PS3, PS4, so daß aus dem dritten und dem vierten Multiplizierer MUL3, MUL4 jeweils ein Quadrierer entsteht. Bei ASK-modulierten Empfangslicht erfolgt also eine analoge Quadrierung des digitalen Ausgangssignals des ersten bzw. zweiten Verstärkers V1, V2 und damit neben der Anpassung der Leistungsverstärkung an die Leistung des am jeweiligen Empfängerzweig anstehenden Empfangslichtes eine Demodulation des Übertragungssignals.

Die Schaltung nach der Fig. 6a mit drittem und viertem Laufzeitglied PS3, PS4 kann auch für FSK-modulierte Signale, also für Signale mit Frequenzsprungmodulation verwendet werden. Voraussetzung ist dabei, daß die Verzögerung des dritten bzw. vierten Laufzeitgliedes PS3, PS4 dem Frequenzhub des Übertragungssignals und des Zwischenfrequenzsignals angepaßt wird. Der vierte und der fünfte Demodulator DEM4, DEM5 stellen in diesem Falle jeweils einen Frequenzdiskriminator dar. Diese Schaltung ist besonders geeignet für FSK-modulierte Signale mit vergleichsweise geringem Frequenzhub.

Für FSK-modulierte Signale mit größerem Frequenzhub ist es zweckmäßig, in der Schaltung nach Fig. 6a den vierten und den fünften Demodulator DEM4, DEM5 durch einen sechsten bzw. siebten gleich aufgebauten Demodulator DEM6, DEM7 zu ersetzen, wie er in der Fig. 6b dargestellt ist. Der sechste und der siebte Demodulator DEM6, DEM7 enthalten jeweils eingangsseitig ein erstes und ein zweites Bandfilter BF1, BF2, deren Eingänge miteinander und mit dem Eingang des Demodulators verbunden sind. An die Eingänge des ersten bzw. zweiten Bandfilters schließen sich die Signaleingänge eines fünften bzw. sechsten Multiplizierers MUL5, MUL6 an, deren Ausgangssignale dem positiven bzw. negativen Eingang eines ersten Subtrahierers SUB1 zugeführt werden. Der Ausgang dieses Subtrahierers stellt den Signalausgang des Demodulators dar. Die Durchlaßbereiche des ersten und des zweiten Bandfilters BF1, BF2 sind in Abhängigkeit vom gewählten Frequenzhub der Übertragungssignale gegeneinander verschoben. Dabei ist der Durchlaßbereich des einen Bandfilters so gewählt, daß die Signale entsprechend den digitalen Einsen durchgelassen werden und der Durchlaßbereich des anderen Bandfilters ist für die Signale entsprechend den digitalen Nullen durchlässig. Zur Unterdrückung von Impulsnebensprechen ist es dabei notwendig, daß sich die Durchschlaßbereiche der beiden Bandfilter möglichst wenig überlappen.

Der in Fig. 7 dargestellte optische Polarisations-Diversitätsempfänger arbeitet nach dem Homodynprinzip, wobei jeder der beiden Empfängerzweige bereits einen Homodynempfänger darstellt. Im ersten Empfängerzweig gelangt das ankommende Licht über den Anschluß ES auf einen vierten optischen Strahlteiler ST 4, der dieses Licht in zwei hinsichtlich der Polarisation zueinander orthogonale Komponenten aufspaltet und diese an erste Eingangsanschlüsse eines vierten und eines fünften 3 dB-Kopplers K4, K5 abgibt. Mit dem zweiten Eingangsanschluß des vierten 3 dB-Kopplers K 4 ist ein Ausgangsanschluß eines zweiten lokalen Lasers LO 2 verbunden, der Licht mit einer Polarisation abgibt, die gleich der Polarisation am anderen Eingangsanschluß des vierten 3 dB-Kopplers K 4 ist. Die von diesem Koppler erzeugten Kombinationssignale gelangen auf einen fünften bzw. sechsten opto elektronischen Wandler in Form einer Lawinen-Photodiode und erzeugen einen entsprechenden Photostrom. Die fünfte und die sechste Diode sind gleichsinnig in Reihe geschaltet, so daß am Verbindungspunkt beider Dioden ein Photostrom entnehmbar ist, der der Differenz der beiden Kombinationssignale entspricht. Da die Schwingfrequenz des zweiten lokalen Lasers LO 2 gleich der des Empfangslichtes gewählt wurde, stellen die Photodioden gleichzeitig die Demodulatoren dar, so daß in diesem Falle die ZF-Ebene entfällt und am Ausgangsanschluß SAA des ersten Empfangszweiges ein demoduliertes Signal ansteht.

Der zweite Empfängerzweig, in dem die senkrecht schwingende Komponente des Empfangslichtes weiterverarbeitet wird, ist analog zum ersten Empfängerzweig aufgebaut und gibt am Ausgangsanschluß SAB ein weiteres demoduliertes Signal ab. An die Ausgangsanschlüsse SAA, SAB ist ein Regelteil RT mit nachfolgendem Summierer angeschlossen, dieses Regelteil RT ist bereits in Verbindung mit Fig. 3 und 5 beschrieben. Die Komponente des Empfangslichtes wird in einem fünften 3 dB-Koppler K5 mit einem im dritten lokalen Laser LO3 erzeugten Lichtsignal mit gleicher Schwingungsrichtung kombiniert und die Kombinationssignale an eine siebte und eine achte Lawinen-Photodiode D7, D8 abgegeben. Da die Schwingfrequenz des dritten lokalen Laseroszilators ebenfalls gleich der Schwingfrequenz des Eingangslichtes ist, erfolgt auch in diesem Falle eine Demodulation nach dem Homodynprinzip, am Ausgangsanschluß SAB steht also ein Signal an, das dem Signal am Ausgangsanschluß SAA entspricht, jedoch den Energieanteil der Komponente des Eingangslichtes repräsentiert, die zur ersten Komponente senkrecht steht. Analog zur Fig. 2 können an Stelle der beiden lokalen Laser LO2, LO3 auch Ausgangsanschlüsse einer einzigen lokalen Laseranordnung vorgesehen werden, an denen zwei Laserlichtkomponenten mit zueinander orthogonaler Schwingungsrichtung und regelbarer Phasendifferenz anstehen. Vom Ausgangssignal der beiden Diodenpaare D5, D6 bzw. D7, D8 wird jeweils eine erste bzw. zweite Phasenregelschleife PLL1, PLL2 gesteuert, die ein entsprechendes Nachsteuersignal an den zweiten bzw. dritten lokalen Laser abgibt. Dies ist im Falle des Homodynempfängers von besonderer Bedeutung, da bei diesem, damit keine ZF-Komponente auftritt, die Schwingfrequenzen der lokalen Laser und des Eingangslichtes exakt übereinstimmen müssen. Die Empfangsanordnung nach der Fig. 7 eignet sich besonders für Empfangssignale mit nicht vollständig unterdrücktem Träger, also Signale mit ASK-Modulation oder mit modifizierter PSK-Modulation, bei der die Phasenumtastung kleiner ± 90° ist und insbesondere im Phasenwinkelbereich zwischen ± 75° und ± 85 ° liegt.

In der Fig. 8 zeigt ein weiteres Ausführungsbeispiel die Hälfte eines Regelteils, also den Regelteil eines Empfängerzweiges, wie er im Zusammenhang mit den Fig. 3 und 4 vorgesehen ist. Während bisher als Regelprinzip die Vorwärtsregelung verwendet wurde, wird bei diesem Ausführungsbeispiel von der Rückwärtsregelung Gebrauch gemacht. Ein siebter Multiplizierer MUL7 erhält neben dem Eingangssignal, bei dem es sich neben dem demodulierten Signal auch um das ZF-Signal handeln kann, ein zweites Signal, das aus dem Ausgangssignal des siebten Multiplizierers MUL7 erzeugt wurde. Dazu wird das Ausgangssignal Sy des Multiplizierers MUL7 einem dritten Gleichrichter GL3 zugeführt, bei dem es sich beim Ausführungsbeispiel um eine einfache Gleichrichterdiode handelt. Das Ausgangssignal des Gleichrichters wird über ein fünftes Tiefpaßfilter TPF5 dem Eingang eines handelsüblichen Radizierers RD zugeführt. Das Ausgangssignal eines Radizierers RD wird dem zweiten Eingang des siebten Multiplizierers MUL7 zugeführt. Im Multiplizierer MUL7 wird durch die Multiplikation der beiden Eingangssignale die entsprechende Bewertung vorgenommen, so daß sich insgesamt im jeweiligen Empfängerzweig die gewünschte Veränderung der Verstärkung des Übertragungssignals ergibt. Die mittlere Leistung des Ausgangssignals Sy ist damit wenigstens annähernd dem Quadrat der mittleren Leistung des Eingangssignals Sx proportional.

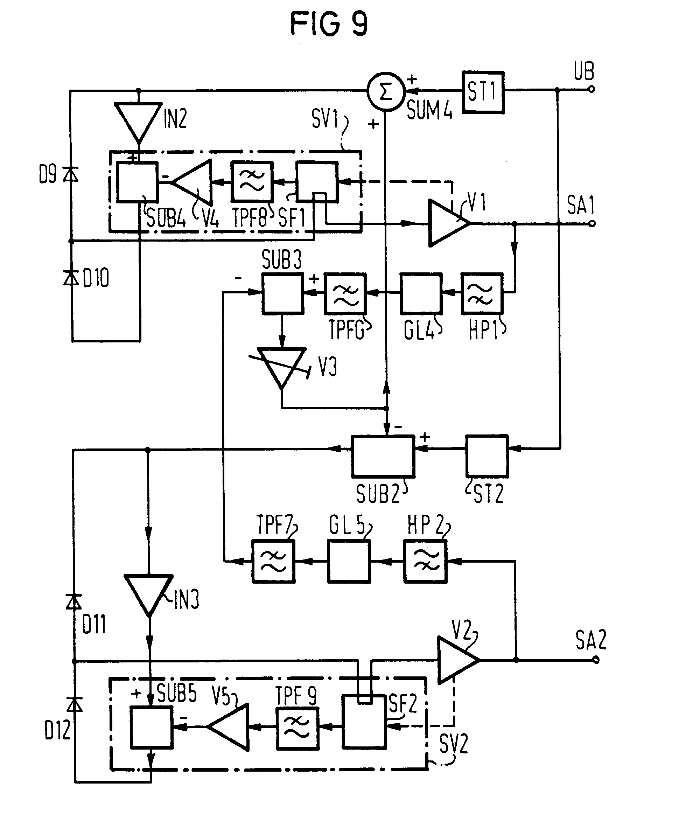

Eine weitere Rückwärtsregelung wird in der Fig. 9 beschrieben. Im Gegensatz zum Ausführungsbeispiel nach Fig. 8 erfolgt hier die Rückwärtsregelung in Verbindung mit den eingangsseitig verwendeten neunten bis zwölften photoelektrischen Wandlern D9... D12, für die Lawinenphotodioden verwendet wurden. Dieses Prinzip hat den Vorteil, daß keine zusätzlichen regelbaren Verstärker für das Zwischenfrequenz- oder das Basisbandsignal zur Leistungsregelung erforderlich sind.

Von den Lawinenphotodioden sind wiederum jeweils zwei in Reihe geschaltet, so daß am Mittelabgriff der Reihenschaltung ein Differenzstrom entnommen werden kann. Zu diesem Zweck ist - ohne Berücksichtigung des ersten und des zweiten Symmetrierverstärkers SV1, SV2 - die Verbindung der neunten und der zehnten Lawinenphotodiode D9, D10 wie bisher an den Eingang des ersten Verstärkers V1 angeschlossen, der wie bisher als Photostromverstärker dient. An den Ausgang dieses Verstärkers ist neben dem weiteren Empfängerzweig über einen ersten Hochpaß HP1 ein vierter Gleichrichter GL4 verbunden, dessen Ausgangssignal über ein sechstes Tiefpaßfilter TPF6 mit dem positiven Eingang eines dritten Subtrahierers SUB3 verbunden ist. Analog dazu ist an die Verbindung der elften und der zwölften der Eingang des zweiten Verstärkers V2 angeschlossen, an dessen Ausgang der weitere Empfängerzweig sowie über einen zweiten Hochpaß HP2 ein fünfter Gleichrichter GL5 verbunden ist. An den Ausgang des fünften Gleichrichters GL5 ist über ein siebtes Tiefpaßfilter TPF7 der negative Eingang des dritten Subtrahierers SUB3 verbunden. Die beiden Hochpaßfilter HP1, HP2 dienen zur Abtrennung möglicherweise vorhandener Gleichstromkomponenten. Der Ausgang des dritten Subtrahierers SUB3 ist über einen dritten Verstärker V3 mit dem positiven Eingang eines vierten Summierers SUM4 und dem negativen Eingang eines zweiten Subtrahierers SUB2 verbunden. Die zweiten positiven Eingänge des vierten Summierers SUM4 und des zweiten Subtrahierers SUB2 sind an Ausgänge eines ersten bzw. zweiten Stellgliedes ST1, ST2 angeschlossen und übernehmen von diesen Stellgliedern die mittlere Vorspannung für die Lawinenphotodioden D9...D12. Die Stellglieder werden von einer Versorgungsspannung UB gespeist und in Abhängigkeit von dem gewünschten Arbeitspunkt der Lawinenphotodioden fest eingestellt. Der Ausgang des vierten Summierers SUM4 ist direkt mit der Kathode der neunten Lawinenphotodiode D9 sowie über einen zweiten Inverter IN2 - ohne Berücksichtigung des ersten Symmetrierverstärkers SV1 - mit der Anode der zehnten Lawinenphotodiode D10 verbunden. Analog dazu ist der Ausgang des zweiten Subtrahierers SUB2 mit der Kathode der elften Lawinenphotodiode D11 sowie über einen dritten Inverter IN3 - ohne Berücksichtigung des zweiten Symmetrierverstärkers SV2 - mit der Anode der zwölften Lawinenphotodiode D12 verbunden.

Die Reihenschaltungen aus gegebenenfalls notwendigen Hochpaßfiltern HP1, HP2 sowie nachgeschalteten Gleichrichtern GL4 bzw. GL5 und dem sechsten bzw. sieben Tiefpaßfilter TPF6, TPF7 stellen jeweils einen Amplitudendetektor dar, der eine von der Amplitude des Differenzstromes der Dioden abhängige Gleichspannung erzeugt und diese an den dritten Subtrahierer SUB 3 abgibt. Statt der Gleichrichter GL4, GL5 können auch Quadrierer verwendet werden, so daß sich ein Leistungsdetektor ergibt. Vom dritten Subtrahierer SUB3 wird die Differenz der beiden Gleichspannungen gebildet und im nachfolgenden dritten Verstärker V3 verstärkt. Dieser Verstärker kann anstatt einer linearen auch eine nichtlineare Kennlinie aufweisen, da das Ausgangssignal des dritten Verstärkers V3 im vierten Summierer SUM4 bzw. im zweiten Subtrahierer SUB2 der Lawinendioden-Vospannung überlagert wird und dabei der nichtlineare Zusammenhang zwischen dem Multiplikationsfaktor der Lawinenphotodiode und deren Vorspannung berücksichtigt werden kann.

Wegen unvermeidlicher Exemplarstreuungen der verwendeten Lawinenphotodioden kann der an deren Verbindungspunkten jeweils auftretende Differenzstrom noch einen Gleichanteil enthalten. Zur Unterdrückung dieser Gleichanteile sind die Symmetrierverstärker SV1, SV2 vorgesehen, die eingangsseitig in die Verbindung zwischen Photodioden ud nachgeschaltetem ersten bzw. zweiten Verstärker V1, V2 eingeschaltet sind. Jeder der beiden Symmetrierverstärkern SV1, SV2 enthält eingangsseitig einen Stromfühler SF1, SF2, denen jeweils ein achtes bzw. neuntes Tiefpaßfilter TPF8, TPF9 nachgeschaltet ist. Der Ausgang dieser Tiefpaßfilter ist jeweils getrennt über einen vierten bzw. fünften Verstärker V4, V5 mit dem negativen Eingang eines vierten bzw. fünften Subtrahierers SUB4, SUB5 verbunden. Der positive Eingang der Subtrahierer ist jeweils mit dem Ausgang des zweiten bzw. dritten Inverters IN2, IN3 verbunden. Der Ausgang der Subtrahierer ist mit dem Anodenanschluß der zehnten bzw. zwölften Lawinenphotodiode D10, D12 verbunden. Die Stromfühler können im einfachsten Falle aus Widerständen bestehen, zweckmäßig ist die Verwendung eines Strom-Spannungs-Wandlers, der mit Hilfe eines Operationsverstärkers aufgebaut ist. Die Stromfühler können dabei auch Teil des ersten bzw. zweiten Verstärkers V1, V2 sein. Durch die Symmetrierverstärker wird die Vorspannung der zehnten bzw. zwölften Lawinenphotodiode D10, D12 geringfügig verändert, so daß sich dadurch ein entsprechend veränderter Multiplikationsfaktor und damit ein entsprechend geänderter Photostrom ergibt. Alternativ zum gezeigten Ausführungsbeispiel kann an Stelle der Vorspannung für die zehnte und/oder zwölfte Lawinenphotodiode D10 und/oder D12 durch die Symmetrierverstärker auch die Vorspannung der neunten und/oder elften Lawinenphotodioden D9 und/ oder D11 verändert werden. An Stelle der Kombinationen aus vorgeschaltetem zweiten Inverter IN2 und vierten Subtrahierer SUB4 bzw. vorgeschalteten dritten Inverter IN3 und fünften Subtrahierer SUB5 können auch Kombinationen aus weiteren Summierern mit jeweils nachgeschalten Invertern verwendet werden.

## Patentansprüche

1. Optischer Polarisations-Diversitäts-Empfänger für modulierte Lichtsignale mit einem optischen Signalverarbeitungsteil und einem, eine opto-elektrische Wandleranordnung (D1...D4) enthaltenden elektrischen Signalverarbeitungsteil, bei dem der optische Signalverarbeitungsteil aus dem Empfangslicht und dem Licht eines lokalen Lasers (LO) 4 optische Kombinationssignale (KS1..KS4) erzeugt und dabei ein erstes und ein zweites, sowie ein drittes und ein viertes Kombinationssignal (KS1, KS2; KS3, KS4) zueinander gleiche Polarisation aufweisen und die Polarisationen des ersten bzw. zweiten zum dritten bzw. vierten Kombinationssignal (KS1, KS2; KS3, KS4) orthogonal sind, daß die Phasendifferenzen zwischen den Komponenten des ersten bzw. des dritten Kombinationssignals (KS1, KS3) um 180 ° phasenverschoben sind gegenüber den Phasendifferenzen zwischen den Komponenten des zweiten bzw. vierten Kombinationssignales (KS2, KS4), daß die opto-elektrische Wandleranordnung vier opto-elektrische (D1..D4) Wandler enthält, an die jeweils eines der Kombinationssignale (KS1...KS4) angekoppelt ist, daß der erste mit dem zweiten, sowie der dritte mit dem vierten opto-elektrischen Wandler (D1, D2; D3, D4) gleichsinnig in Serie geschaltet sind und daß am Verbindungspunkt des ersten und zweiten, sowie des dritten und vierten opto-elektrischen Wandlers (D1, D2; D3, D4) das elektrische Differenzsignal zur weiteren Verarbeitung ansteht, **dadurch gekennzeichnet,**
daß erster und zweiter, sowie dritter und vierter opto-elektrischer Wandler (D1, D2, D3, D4) mit dem jeweils nachgeschalteten Verstärker (V1, V2) Teil eines Empfängerzweiges sind,
daß die Leistungsverstärkung im jeweiligen Empfängerzweig wenigstens annähernd proportional der Leistung des am jeweiligen Empfängerzweig anstehenden Empfangslichtes ist, daß den Ausgangsanschlüssen der beiden Empfängerzweige ein Summierer (SUM1) nachgeschaltet ist und in wenigstens einem Empfängerzweig ein Phasenschieber (PS2) angeordnet sein kann.

2. Optischer Polarisations-Diversitäts-Empfänger nach Anspruch 1 **dadurch gekennzeichnet,** daß die Amplitudenverstärkung im jeweiligen Empfängerzweig in Abhängigkeit von der am Empfängerzweig anstehenden Signalamplitude erfolgt.

3. Optischer Polarisations-Diversitäts-Empfänger nach Ansprüchen 1 oder 2, **dadurch gekennzeichnet,** daß das die Leistungsverstärkung im jeweiligen Empfängerzweig steuernde Regelsignal aus der Leistung des ungeregelten Signals abgeleitet ist.

4. Optischer Polarisations-Diversitäts-Empfänger nach Ansprüchen 1 oder 2, **dadurch gekennzeichnet,** daß das die Leistungsverstärkung im jeweiligen Empfängerzweig steuernde Regelsignal aus der Leistung des geregelten Signals abgeleitet ist.

5. Optischer Polarisations-Diversitäts-Empfänger nach Ansprüchen 1 bis 4, **dadurch gekennzeichnet,** daß die Leistungsverstärkung im jeweiligen Empfängerzweig im Signalweg zwischen dem Ausgang eines Demodulators (MUL1, MUL2; DEM2, DEM3) und dem Eingang des Summierers (SUM1) geregelt wird.

6. Optischer Polarisations-Diversitäts-Empfänger nach Ansprüchen 1 bis 4, **dadurch gekennzeichnet,** daß die Leistungsverstärkung im jeweiligen Empfängerzweig im Signalweg vor dem Demodulator geregelt wird und dabei die Demodulatoren im Signalweg vor dem Summierer angeordnet sind.

7. Optischer Polarisations-Diversitäts-Empfänger nach Ansprüchen 1 bis 4, **dadurch gekennzeichnet,** daß die Leistungsverstärkung im jeweiligen Empfängerzweig im Signalweg vor dem Summierer (SUM1) geregelt wird und dabei der Demodulator (DEM1) dem Summierer (SUM1) nachgeschaltet ist.

8. Optischer Polarisations-Diversitäts-Empfänger nach Ansprüchen 1 bis 3 oder 5, **dadurch gekennzeichnet,** daß jeder Empfängerzweig als Homodynempfänger aufgebaut ist und die Regelung der Leistungsverstärkung im Signalweg vor dem Summierer erfolgt.

9. Optischer Polarisations-Diversitäts-Empfänger nach Ansprüchen 1, 2 oder 4, **dadurch gekennzeichnet,** daß als opto-elektrische Wandler Lawinen-Photodioden (D9...D12) vorgesehen sind und die Regelung der Leistungsverstärkung durch die Regelung der Vorspannung der Lawinen-Photodioden (D9...D12) erfolgt.

10. Optischer Polarisations-Diversitäts-Empfänger nach Ansprüchen 1, 2 oder 3, **dadurch gekennzeichnet,** daß bei Hüllkurvendemodulation für Eingangssignale mit Frequenzsprungmodulation oder Amplitudensprungmodulation und bei Eingangssignalen mit differentieller Phasenumtastmodulation die Regelung der Verstärkung durch die Demodulatoren (DEM4, DEM5) erfolgt, denen der Summierer (SUM1) nachgeschaltet ist.

## Claims

1. Optical polarisation diversity receiver for modulated light signals, having an optical signal processing part and an electrical signal processing part including an optoelectrical transducer arrangement (D1...D4), in which receiver the optical signal processing part generates 4 optical combination signals (KS1..KS4) from the received light and the light of a local laser (LO), and in this case a first and a second, as well as a third and a fourth, combination signal (KS1, KS2; KS3, KS4) exhibit the same polarisation in relation to one another and the polarisations of the first and respectively second in relation to the third and respectively fourth, combination signals (KS1, KS2; KS3, KS4) are orthogonal, the phase differences between the components of the first and respectively of the third combination signals (KS1, KS3) are phase-shifted by 180° in relation to the phase differences between the components of the second and respectively fourth combination signals (KS2, KS4), the optoelectrical transducer arrangement includes four optoelectrical (D1..D4) transducers, to which in each instance one of the combination signals (KS1...KS4) is coupled, the first optoelectrical transducer is connected in the same sense in series with the second, and the third is connected in the same sense in series with the fourth (D1, D2; D3, D4), and the electrical difference signal is present at the point of connection of the first and second, as well as of the third and fourth, optoelectrical transducers (D1, D2; D3, D4), for further processing, characterised in that the first and second, as well as the third and fourth, optoelectrical transducers (D1, D2, D3, D4) together with the respective downstream amplifier (V1, V2) are part of a receiver branch, in that the power amplification in the respective receiver branch is at least approximately proportional to the power of the received light present at the respective receiver branch, in that a summator (SUM1) is connected downstream of the output connections of the two receiver branches and a phase shifter (PS2) may be disposed in at least one receiver branch.

2. Optical polarisation diversity receiver according to Claim 1, characterised in that the amplitude amplification in the respective receiver branch takes place as a function of the signal amplitude present at the receiver branch.

3. Optical polarisation diversity receiver according to Claim 1 or 2, characterised in that the regulating signal controlling the power amplification in the respective receiver branch is derived from the power of the unregulated signal.

4. Optical polarisation diversity receiver according to Claim 1 or 2, characterized in that the regulating signal controlling the power amplification in the respective receiver branch is derived from the power of the regulated signal.

5. Optical polarisation diversity receiver according to Claims 1 to 4, characterised in that the power amplification in the respective receiver branch is regulated in the signal path between the output of a demodulator (MUL1, MUL2; DEM2, DEM3) and the input of the summator (SUM1).

6. Optical polarisation diversity receiver according to Claims 1 to 4, characterised in that the power amplification in the respective receiver branch is regulated in the signal path ahead of the demodulator, and in this case the demodulators are disposed in the signal path ahead of the summator.

7. Optical polarisation diversity receiver according to Claims 1 to 4, characterised in that the power amplification in the respective receiver branch is regulated in the signal path ahead of the summator (SUM1) and in this case the demodulator (DEM1) is connected downstream of the summator (SUM1).

8. Optical polarisation diversity receiver according to Claims 1 to 3 or 5, characterised in that each receiver branch is constructed as a homodyne receiver and the regulation of the power amplification takes place in the signal path ahead of the summator.

9. Optical polarisation diversity receiver according to Claim 1, 2 or 4, characterised in that avalanche photodiodes (D9...D12) are provided as optoelectrical transducers and the regulation of the power amplification takes place by the regulation of the bias voltage of the avalanche photodiodes (D9...D12).

10. Optical polarisation diversity receiver according to Claims 1, 2 or 3, characterised in that in the case of envelope curve demodulation for input signals with frequency jump modulation or amplitude jump modulation and in the case of input signals with differential phase-shift-keyed modulation the regulation of the amplification is undertaken by the demodulators (DEM4, DEM5), downstream of which the summator (SUM1) is connected.

## Revendications

1. Récepteur optique à diversité de polarisation pour des signaux lumineux modulés, comportant une partie optique de traitement du signal et une partie électrique de traitement du signal, qui comporte un dispositif à transducteurs optoélectriques (D1...D4), et dans lequel la partie optique de traitement des signaux produit 4 signaux optiques de combinaison (KS1...KS4) à partir de la lumière de réception et de la lumière d'un laser local (LO), et un premier et un second ainsi qu'un troisième et un quatrième signal de combinaison (KS1, KS2; KS3, KS4) possèdent des polarisations identiques, et les polarisations des premier et second signaux de combinaison (KS1, KS2) sont orthogonales aux polarisations des troisième et quatrième signaux de combinaison (KS3, KS4), que les différences de phase entre les composantes des premier et troisième signaux de combinaison (KS1, KS3) sont déphasés de 180° par rapport aux différences de phase entre les composantes des seconds et quatrièmes signaux de combinaison (KS2, KS4), que le dispositif optoélectrique à transducteurs comporte quatre transducteurs optoélectriques (D1...D4), auxquels sont appliqués respectivement l'un des signaux de combinaison (KS1...KS4), que le premier transducteur optoélectrique (D1) est branché en série avec le second transducteur optoélectrique (D2) et que le troisième transducteur optoélectrique (D3) est branché en série avec le quatrième transducteur optoélectrique (D4), dans le même sens et que le signal électrique différentiel est présent au niveau du point de jonction des premier et second transducteurs optoélectriques (D1,D2) ainsi que des troisième et quatrième transducteurs optoélectriques (D3,D4), pour la poursuite de son traitement, caractérisé par le fait
que les premier et second transducteurs optoélectriques (D1, D2) ainsi que les troisième et quatrième transducteurs optoélectriques (D3,D4), en aval desquels sont branchés respectivement les amplificateurs (V1,V2), font partie d'une branche de réception,
que l'amplification de puissance dans la branche de réception respective est au moins approximativement proportionnelle à la puissance de la lumière reçue présente dans la branche respective de réception, qu'un additionneur (SUM1) est branché en aval des bornes de sortie des deux branches de réception et qu'un déphaseur (PS2) peut être monté dans au moins une branche de réception.

2. Récepteur optique à diversité de polarisation suivant la revendication 1, caractérisé par le fait que l'amplification d'amplitude dans la branche de réception respective s'effectue en fonction de l'amplitude du signal présent dans la branche de réception.

3. Récepteur optique à diversité de polarisation suivant la revendication 1 ou 2, caractérisé par le fait que le signal de réglage, qui commande l'amplification de puissance dans la branche de réception respective, est dérivé de la puissance du signal non réglé.

4. Récepteur optique à diversité de polarisation suivant la revendication 1 ou 2, caractérisé par le fait que le signal de réglage, qui commande l'amplification de puissance dans la branche de réception respective, est dérivée de la puissance du signal réglé.

5. Récepteur optique à diversité de polarisation suivant les revendications 1 à 4, caractérisé par le fait que l'amplification de puissance dans la branche de réception respective est réglée dans la voie de transmission de signaux entre la sortie d'un démodulateur (MUL1, MUL2; DEM2, DEM3) et l'entrée de l'additionneur (SUM1).

6. Récepteur optique à diversité de polarisation suivant les revendications 1 à 4, caractérisé par le fait que l'amplification de puissance dans la branche de réception respective est réglée dans la voie de transmission de signaux en amont du démodulateur et que les démodulateurs sont disposés dans la voie de transmission de signaux en amont de l'additionneur.

7. Récepteur optique à diversité de polarisation suivant les revendications 1 à 4, caractérisé par le fait que l'amplificateur de puissance dans la branche de réception respective est réglée dans la voie de transmission de signaux en amont de l'additionneur (SUM1) et que le démodulateur (DEM1) est branché en aval de l'additionneur (SUM1).

8. Récepteur optique à diversité de polarisation suivant les revendications 1 à 3 ou 5, caractérisé par le fait que chaque branche de réception est réalisée sous la forme d'un récepteur homodyne et que la régulation de l'amplification de puissance dans la branche s'effectue dans la voie de transmission des signaux en amont de l'additionneur.

9. Récepteur optique à diversité de polarisation suivant les revendications 1, 2 ou 4, caractérisé par le fait qu'il est prévu comme transducteurs optoélectriques, des photodiodes à avalanche (D9...D12) et que la régulation de l'amplification de puissance est réalisée au moyen de la régulation de la tension de polarisation des photodiodes à avalanche (D9...D12).

10. Récepteur optique à diversité de polarisation suivant les revendications 1, 2 ou 3, caractérisé par le fait que dans le cas de la modulation de courbes enveloppes pour des signaux d'entrée avec une modulation à saut de fréquence ou une modulation d'amplitude et dans le cas de signaux d'entrée soumis à une modulation différentielle par manipulation de phase, la régulation de l'amplification est réalisée au moyen des démodulateurs (DEM4, DEM5), en aval desquels est branché l'additionneur (SUM1).
